# EUROPÄISCHE PATENTANMELDUNG

(11) **EP 3 763 608 A1**
(43) Veröffentlichungstag der Anmeldung: **13.01.2021**
(21) Anmeldenummer: 20177145.8
(22) Anmeldetag: 28.05.2020
(51) Int. Cl.: B62J 6/015, B62J 45/40, B62J 6/165, B62K 27/00

(54) **NACHRÜSTBARES LEUCHTMITTEL, INSBESONDERE FÜR FAHRRADANHÄNGER**

(30) Priorität: 09.07.2019 DE 202019103762 U
(71) Anmelder: Holger, Fürstenberger, 76135 Karlsruhe (DE)
(72) Erfinder: Holger, Fürstenberger, 76135 Karlsruhe (DE)
(74) Vertreter: Geitz Truckenmüller Lucht Christ

(57) **Zusammenfassung**

Die Erfindung betrifft ein Leuchtmittel zum Anbringen an einem Transportmittel, insbesondere an einem Fahrradanhänger. Dieses zeichnet sich dadurch aus, dass das nachrüstbare Leuchtmittel aus wenigstens einem Gurt besteht, welcher wenigstens eine Befestigungsverbindung, insbesondere einen Steckschließer, und/oder wenigstens einen Gurtverbinder, insbesondere eine Schlaufe, enthält, sowie, dass der Länge nach eine Lichtleiste, insbesondere eine LED-Lichtleiste, angebracht und/oder in diese Gurt integriert ist, wobei diese Lichtleiste über eine interne und/oder externe Stromquelle mit Strom versorgbar ist, so dass dieses Leuchtmittel, insbesondere an Fahrradanhängern, nachrüstbar anbringbar ist.

## Beschreibung

Die Erfindung betrifft ein nachrüstbares Leuchtmittel für Transportmittel, insbesondere für Fahrradanhänger.

Aus dem Stand der Technik ist unter anderem das deutsche Gebrauchsmuster DE 20 2010 003 447 U1 vorbekannt, welches ein Leuchtsignal offenbart das sowohl links als auch rechts anbringbar ist, und sich dadurch auszeichnet, dass dieses am Fahrradlenker, Gepäckträger oder am Fahrradanhänger in einfacher Montage angebracht und in Funktion gesetzt werden kann.

Weiterhin betrifft das deutsche Gebrauchsmuster DE 20 2004 014 717 U1 eine Signalanlage für Transportmittel, welche auch bei schlechten Sichtverhältnissen für die Sicherheit der Personen und Fahrzeuge sorgt, wobei sich diese dadurch auszeichnet, dass eine Stange mit einen Wimpel und Beleuchtung an beliebigen Fahrzeugen angebracht werden kann.

Auch offenbart das deutsche Patent DE 10 2014 112 248 A1 einen Fahrradanhänger, insbesondere zum Transport von Kindern, mit einem Chassis und einen damit verbundenen Rahmengestell für eine Fahrgastzelle, der mindestens zwei Räder aufweist und der mit einer Deichsel zum Anhängen an ein Fahrrad und mit mindestens einem Dritten Rad zur Nutzung des Fahrradanhängers als Kinderwagen oder Jogger versehen werden kann, der sich dadurch auszeichnet, dass eine Beleuchtungseinrichtung in den Schiebegriff oder in eine Kupplung zur Befestigung des Schiebegriffs am Rahmengestell integriert ist.

Weiterhin betrifft das deutsche Patent DE 103 30 184 A1 eine Beleuchtungseinrichtung für Sport und Freizeitgeräte beispielsweise Fahnenstangen und Kinderwägen sowie Gehstöcke, Stöcke für Nordic Walking und Helme, wobei sich diese dadurch auszeichnet, dass das Beleuchtungsmittel mit einem zweiteiligen Gehäuse, bestehend aus einem Vorderteil und einem Rückteil, einem bauteiloptimierten Stromkreis ohne Platine mit mindestens einer Batterie/Akkumulator, mindestens einem Leuchtmittel, welches gegebenenfalls über einen Widerstand verbunden ist, der über Druck in einen Diodensockel, mit einem Verbindungsblech verbunden ist und über eine mit dem Gehäuse hinten verbundene Feder einen Stromkreis herstellt, wobei diese Einheit mit einem Befestigungsclip verbunden ist, welche um 360° relativ zum Gehäuse drehbar ist, wobei die Auflagefläche bevorzugt als Prisma ausgeführt ist und über einen Gummiring mit dem Gegenstück verbunden werden kann.

Auch offenbart das deutsche Gebrauchsmuster DE 92 16 584 U1 ein Leuchtsignal, welches dem nachfolgenden Verkehr die Verlangsamung bzw. einen Bremsvorgang anzeigt, wobei sich das Leuchtsignal dadurch auszeichnet, dass ein Betätigen einer oder beider Handbremsen eines mit dem Leuchtsignal ausgestatteten Fahrrads dem nachfolgenden Verkehr durch Lichtzeichen signalisiert, dass der Radfahrer seine Geschwindigkeit verlangsamt. Dabei wird die Leuchtkraft der Signalgeber immer um einen festen Faktor erhöht, um auch bei leuchtenden Rücklicht, die gewünschte Signalwirkung zu erreichen. Die vorstehend erläuterte Vorrichtung kann mit einer bereits vorhandenen Lichtanlage kombiniert werden und für einen Fahrradanhänger genutzt werden.

Außerdem betrifft das deutsche Patent DE 10 2014 004 698 B3 eine Beleuchtungseinrichtung für zumindest teilweise muskelbetriebene Fahrzeuge bzw. dessen Anhänger, welche jeweils wenigstens ein Lichtführelement und eine Montageeinrichtung umfassen, welche geeignet sind, eine externe Lichtquelle dergestalt aufzunehmen, dass das von der Lichtquelle abgestrahlte Licht wenigstens teilweise in das Lichtführelement eingespeist und derart aus dem Lichtführelement austreten kann, ohne dass das austretende Licht als Beleuchtung für das zumindest teilweise muskelbetriebene Fahrzeug bzw. dessen Anhängern dienen kann.

Somit liegt der Erfindung die Aufgabe zu Grunde, ein nachrüstbares Leuchtmitteln für Transportmittel bereitzustellen, welches variabel an die jeweiligen Transportmittel anpassbar ist. Diese Aufgabe wird mit dem geltenden Anspruch 1 gelöst. Die Ansprüche 2 bis 13 betreffen vorteilhafte Ausgestaltung der Erfindung.

Gemäß dem geltenden Anspruch 1, ist die Erfindung ein Leuchtmittel zum Anbringen an einem Transportmittel, welches sich dadurch auszeichnet, dass das nachrüstbare Leuchtmittel aus wenigstens einem Gurt besteht, welcher wenigstens eine Befestigungsverbindung, insbesondere einen Steckschließer, und/oder wenigstens einen Gurtbinder, insbesondere eine Schlaufe, enthält. Des Weiteren ist in diesen Gurt der Länge nach eine Lichtleiste, insbesondere eine LED-Lichtleiste, angebracht und/oder in diesen Gurt integriert, wobei diese Lichtleiste über eine interne und/oder externe Stromquelle mit Strom versorgbar ist, so dass dieses Leuchtmittel, insbesondere an Fahrradanhängern, im Wege der Nachrüstung befestigbar ist.

In vorteilhafter Ausgestaltung sieht die Erfindung vor, dass die Lichtleiste aktiv oder passiv betreibbar ist, wobei aktiv eine LED-Lichtleiste beinhaltet, welche selbstständig leuchtet, und passiv eine Lichtleiste beinhaltet, welche durch einen Lichtgeber, insbesondere einer LED, zum Leuchten gebracht werden kann. Des Weiteren kann die Lichtleiste statt weißes Licht andersfarbiges Licht, insbesondere rotes oder oranges Licht, ausstrahlen. Somit ist die Farbe des auszugebenen Lichts der Lichtleiste den jeweiligen Anforderungen, bspw. als Blinklicht oder Bremslicht, anpassbar.

In abermaliger vorteilhafter Ausgestaltung der Erfindung, ist am Ende der Lichtleiste, insbesondere einer LED-Lichtleiste, ein zusätzlicher Lichtauslass vorhanden, welcher als Lichtquelle zur Beleuchtung verwendbar ist.

Gemäß Anspruch 4 sieht die Erfindung für das Leuchtmittel vor, dass an dem zusätzlichen Lichtauslass eine Linse angebracht ist, mit der der zusätzliche Lichtaustritt umlenkbar ist. Somit ist die Lichtleiste gleichzeitig als Scheinwerfer nutzbar.

In abermaliger vorteilhafter Ausgestaltung beinhaltet das Leuchtmittel als Befestigungsverbindungen Steckschließer, Magnete, Magnetverriegelungen, Klettverschließer, Gummibänder, O-Ringe sowie Spanngurte und Kabelbinder.

In weiterer vorteilhafter Ausgestaltung, gemäß Anspruch 6, ist die Lichtleiste, insbesondere die LED Lichtleiste, mittels eines farbigen Bandes am Gurt, bevorzugt durch Vernähen, befestigt. Somit können bspw. Blinklichter und Bremslichter durch unterschiedliche Farben der Bänder bereitgestellt werden.

Gemäß Anspruch 7 sieht die Erfindung vor, dass das farbige Band zum Vernähen der Lichtleiste am Gurt aus einem reflektierenden Material besteht. Somit fungieren die Lichtleisten zugleich als Reflektoren.

In abermaliger vorteilhafter Ausgestaltung sieht die Erfindung für das Leuchtmittel vor, dass dieses aus wenigstens drei Gurten besteht, wobei zwei davon jeweils an einem Ende eines dritten Gurtes mittels Schlaufen befestigt sind. Somit sind die Gurte in Ihrer Länge und Ihren Gurtverbindungen jeweils für sich einstellbar, so dass Sie an das jeweilige Transportmittel anpassbar sind.

In vorteilhafte Ausgestaltung gemäß Anspruch 9 sind bei zwei der drei Gurten die Lichtleisten, insbesondere die LED Lichtleisten, jeweils mit einem weißen Band befestigt, sowie bei einem der drei Gurten eine Lichtleiste mittels einem roten Band.

In abermaliger vorteilhafter Ausgestaltung beinhaltet das Leuchtmittel eine Platine zur Steuerung der in dem Leuchtmittel angeordneten Lichtleisten, wobei auf der Platine die Daten zur Steuerung der Lichtleisten, vorzugsweise veränderbar, gespeichert sind.

Gemäß Anspruch 11 sieht die Erfindung für das Leuchtmittel vor, dass mittels Bluetooth und/oder Wi-Fi oder ein anderes drahtloses Datenübertragungsformat, insbesondere RFID, welche innerhalb der beschreibbaren Platine integriert sind, per Remotezugriff, insbesondere per Smartphone, dass Leuchtmittel steuerbar ist und, dass die auf diese Platine abgespeicherten Daten, abrufbar sind.

In vorteilhafter Ausgestaltung beinhaltet das Leuchtmittel einen Bewegungssensor, so dass insbesondere ein unbefugtes bewegen eines mit dem Leuchtmittel ausgerüsteten Transportmittels detektierbar ist.

In abermaliger vorteilhafter Ausgestaltung sieht die Erfindung vor, dass im Leuchtmittel ein Lichtsensor enthalten ist, wodurch insbesondere eine automatische Lichtsteuerung herstellbar ist.

Die Erfindung sieht gemäß Anspruch 14 für das Leuchtmittel vor, dass die interne Stromquelle ein Akkumulator und/oder eine Batterie ist, wobei der Akkumulator über eine Schnittstelle, insbesondere eine USB-Schnittstelle, ladbar ist.

In weiterer vorteilhafter Ausgestaltung ist eine Schnittstelle, insbesondere eine USB-Schnittstelle, enthalten, womit die Lichtleiste über eine externe Stromquelle, insbesondere einem Smartphone, betreibbar ist.

Die Erfindung wird nachstehend anhand eines Ausführungsbeispiels näher erläutert. Es zeigen:
- Fig. 1: ein Ausführungsbeispiel des Leuchtmittels in einer Ansicht von oben,
- Fig. 2: eine Detailansicht der Stromquelle eines parallel verlaufenden Gurtes des Leuchtmittels gemäß Figur 1 in einer perspektivischen Ansicht,
- Fig. 3: eine Detailansicht der Verbindung eines parallel verlaufenden und eines vertikal verlaufenden Gurtes gemäß Figur 1 in einer perspektivischen Ansicht,
- Fig. 4: das Leuchtmittel gemäß Figur 1 befestigt, an einem Fahrradanhänger in einer perspektivischen Ansicht,
- Fig. 5: den Fahrradanhänger gemäß Figur 4, ausgerüstet mit dem Leuchtmittel gemäß Figur 1 in einer Frontansicht,
- Fig. 6: den Fahrradanhänger gemäß Figur 4, ausgerüstet mit dem Leuchtmittel gemäß Figur 1 in einer Rückansicht, sowie
- Fig. 7: eine Detailansicht der Befestigung des vertikal verlaufenden Gurtes des Leuchtmittels am Fahrradanhänger gemäß Figur 4.

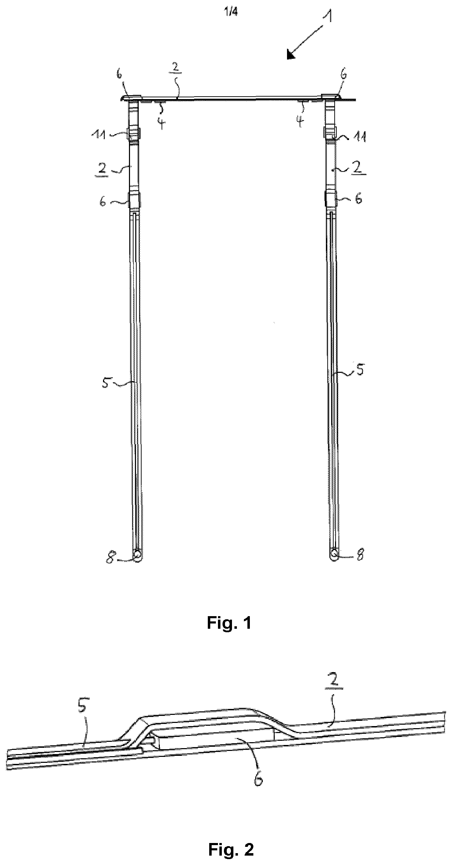

Figur 1 zeigt ein Ausführungsbeispiel des Leuchtmittels 1 in einer Ansicht von oben, wobei das Leuchtmittel 1 drei Gurte 2 umfasst, die jeweils für sich über eine Lichtleiste 5 sowie jeweils über eine Stromquelle 6 verfügen. Zwei der drei Gurte 2 verlaufen parallel zueinander und sind hierbei über Schlaufen 4 am dritten, vertikal verlaufenden Gurt 2 jeweils links und rechts an diesem Gurt 2 über Schlaufen 4 befestigt, wobei die zwei parallel zueinander verlaufenden Gurte 2, welche jeweils am dritten, vertikal verlaufenden Gurt 2 befestigt sind, jeweils für sich über einen Magneten 8 verfügen, mit dem der jeweilige parallel verlaufende Gurt 2 mittels eines Magnetes 8 an einem Transportmittel, insbesondere an einem Fahrradanhänger 7, wenn dieser aus einem ferromagnetischen Material, insbesondere Metall, besteht, befestigbar ist.

Figur 2 zeigt einen der parallel verlaufenden Gurte 2 des Leuchtmittels 1 gemäß Figur 1 in einer Detailansicht, wobei die Lichtleiste 5 sowie deren Stromquelle 6, welche in einen der parallel verlaufenden Gurte 2 integriert ist, gezeigt ist.

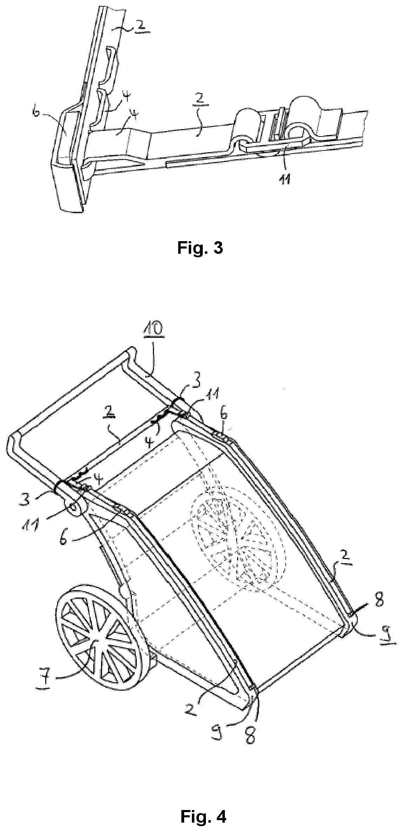

Figur 3 zeigt die Detailansicht der Verbindung über Schlaufen 4 zwischen einem der parallel verlaufenden Gurte 2 und eines vertikal verlaufenden Gurtes. Hierbei enthält der parallel verlaufende Gurt 2 am Ende des Gurtes 2 eine Schlaufe 4, welche in die am vertikal verlaufenden Gurt 2 unterseitig befestigte Schlaufe 4 eingreift, so dass eine feste und dennoch bewegliche Verbindung hergestellt ist. Auch ist die Stromquelle 6 des in Figur 1 dargestellten vertikal verlaufenden Gurtes 3 gezeigt sowie eine Befestigungsverbindung in Form einer Schnalle 11, mit welcher der parallelverlaufende Gurt 2 gestrafft werden kann.

Figur 4 zeigt das Leuchtmittel 1 gemäß Figur 1, befestigt an einem Fahrradanhänger 7, in einer perspektivischen Ansicht. Die zwei parallel verlaufenden Gurte 2 des Leuchtmittels 1 sind hierbei mittels der Magnete 8 am unteren Teil des Rahmens 9, des Fahrradanhängers 7 sowie oberseitig an einem vertikal angeordneten Gurt 2 über Schlaufen 4 befestigt, wobei dieser vertikal verlaufende Gurt 2 am Haltegriff 10 des Fahrradanhängers 7 über Befestigungsverbindungen, hier O-Ringe 3, befestigt ist. Weiterhin zeigt Figur 4, dass die zwei parallel zueinander verlaufenden Gurte 2, welche jeweils am vertikal verlaufenden Gurt 2 befestigt sind, der Länge nach am Rahmen 9 durch die Straffung mittels der Schnalle 11 und der Befestigung durch den Magneten 8 anliegen.

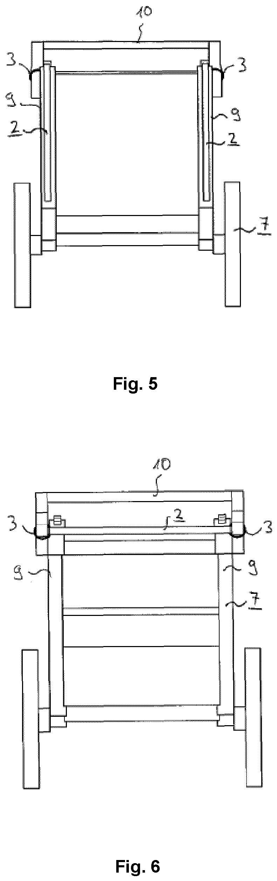

Figur 5 zeigt das an einem Fahrradanhänger 7 ausgerüstete Leuchtmittel 1, gemäß Figur 4, in einer Frontansicht und Figur 6, gemäß Figur 4, dieses in einer Rückansicht. Figur 5 zeigt, dass die parallel verlaufenden Gurte 2 der gesamten Länge nach am vorderen Rahmen 9 des Fahrradanhängers anliegen, sowie dass der vertikal verlaufende Gurt 2 mit den Befestigungsverbindung, hier O-Ringe 3, am Haltegriff 10 des Fahrradanhängers 7 befestigt ist.

Figur 6 zeigt die Rückansicht des Fahrradanhängers 7, gemäß Figur 4, bei dem der vertikal verlaufende Gurt 2 über Befestigungsverbindungen, hier O-Ringe 3, am Haltegriff 10 des Fahrradanhängers befestigt ist.

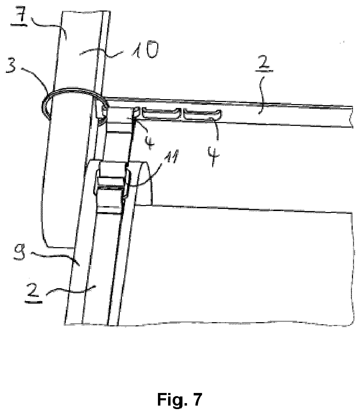

Figur 7 zeigt den parallel verlaufenden Gurt 2, welcher am vertikal verlaufenden Gurt 2 mittels Schlaufen 4 befestigt ist, gemäß Figur 4, in einer Detailansicht. Die Figur 7 zeigt, dass der vertikal verlaufende Gurt 2 mit einer Befestigungsverbindung, hier einem O-Ring 3, am Haltegriff 10 des Fahrradanhängers 7 befestigt ist, sowie, dass der parallel verlaufende Gurt 2 über eine Schnalle 11 verfügt, mit der der Gurt 2 auf die entsprechende Länge des vorderen Rahmens 9 des Fahrradanhängers 7 eingestellt werden kann.

Somit ist vorstehend ein nachrüstbares Leuchtmittel 1, insbesondere für Fahrradanhänger 7 beschrieben, dass sich dadurch auszeichnet, dass das Leuchtmittel 1 aus wenigstens einem Gurt 2, welcher über Magnete 8, Schlaufen 4 und O-Ringe 3 befestigbar ist, besteht und eine integrierte Lichtleiste 5 sowie eine integrierte Stromquelle 6 enthält, mit welcher die Lichtleiste 5 des Leuchtmittels 1 betreibbar ist.

### BEZUGSZEICHENLISTE

- 1: Leuchtmittel
- 2: Gurt
- 3: O-Ring
- 4: Schlaufe
- 5: Lichtleiste
- 6: Stromquelle
- 7: Fahrradanhänger
- 8: Magnet
- 9: Rahmen
- 10: Haltegriff
- 11: Schnalle

## Patentansprüche

1. Leuchtmittel (1) zum Anbringen an einem Transportmittel; insbesondere Fahrradanhänger (7),
**dadurch gekennzeichnet, dass** das nachrüstbare Leuchtmittel (1) aus wenigstens einem Gurt (2) besteht, welcher wenigstens eine Befestigungsverbindung (3), insbesondere einen Steckschließer, und/oder wenigstens einen Gurtverbinder, insbesondere eine Schlaufe (4), enthält, sowie, dass der Länge nach eine Lichtleiste (5), insbesondere eine LED-Lichtleiste, angebracht und/oder in diesen Gurt (2) integriert ist, wobei diese Lichtleiste (5) über eine interne und/oder externe Stromquelle (6) mit Strom versorgbar ist, so dass dieses Leuchtmittel (1), insbesondere an Fahrradanhängern (7), nachrüstbar anbringbar ist.

2. Leuchtmittel (1) nach Anspruch 1, **dadurch gekennzeichnet, dass** die Lichtleiste (5) aktiv oder passiv betreibbar ist, wobei aktiv eine LED-Lichtleiste beinhaltet, welche selbstständig leuchtet, und passiv eine Lichtleiste (5) beinhaltet, welche durch einen Lichtgeber, insbesondere durch eine LED, zum Leuchten bringbar ist sowie, dass die Lichtleiste (5) statt weißes Licht andersfarbiges Licht, insbesondere rotes oder oranges Licht, emittiert.

3. Leuchtmittel (1) nach Anspruch 1 bis 2, **dadurch gekennzeichnet, dass** am Ende einer Lichtleiste (5), insbesondere einer LED-Lichtleiste, ein zusätzlicher Lichtauslass vorhanden ist, welche als Lichtquelle zur Beleuchtung verwendbar ist.

4. Leuchtmittel (1) nach Anspruch 3, **dadurch gekennzeichnet, dass** eine Linse am zusätzlichen Lichtauslass angebracht ist, mit dem der zusätzliche Lichtaustritt umlenkbar ist.

5. Leuchtmittel (1) nach Anspruch 1 bis 4, **dadurch gekennzeichnet, dass** die Befestigungsverbindungen Steckschließer, Magnete (8), Magnetverriegelungen, Klettverschließer, Gummibänder, Schnallen (11), O-Ringe (3) sowie Spanngurte und Kabelbinder sind.

6. Leuchtmittel (1) nach einen oder mehreren vorrangegangenen Ansprüchen, **dadurch gekennzeichnet, dass** die Lichtleiste (5), insbesondere die LED-Lichtleiste, mittels eines farbigen Bandes am Gurt (2), bevorzugt durch Vernähen, befestigt ist.

7. Leuchtmittel (1) nach Anspruch 6, **dadurch gekennzeichnet, dass** das farbige Band zum Vernähen der Lichtleiste am Gurt aus einem reflektierenden Material besteht.

8. Leuchtmittel (1) nach einen oder mehreren vorrangegangenen Ansprüchen, **dadurch gekennzeichnet, dass** das Leuchtmittel (5) wenigstens drei Gurte (2) umfasst, wobei zwei davon jeweils an einem Ende eines dritten Gurtes (2) mittels Schlaufen (4) befestigt sind.

9. Leuchtmittel (1) nach Anspruch 8, **dadurch gekennzeichnet, dass** zwei der drei Gurte (2) weiße Bänder zur Befestigung der LED-Lichtleiste (5) sowie einer der drei Gurte (2) ein rotes Band zur Befestigung der LED-Lichtleiste (5) beinhalten.

10. Leuchtmittel (1) nach einen oder mehreren vorrangegangenen Ansprüchen, **dadurch gekennzeichnet, dass** eine Platine zur Steuerung der in dem Leuchtmittel angeordneten Lichtleisten, wobei auf der Platine die Daten zur Steuerung der Lichtleisten, vorzugsweise veränderbar, gespeichert sind.

11. Leuchtmittel (1) nach Anspruch 10, **dadurch gekennzeichnet, dass** mittels Bluetooth und/oder Wi-Fi oder einem anderen drahtlosen Datenübertragungsformates, insbesondere RFID, welche innerhalb der Platine integriert sind, das Leuchtmittel (1) per Remotezugriff, insbesondere per Smartphone, steuerbar ist und Daten des Leuchtmittels (1), welche auf der Platine speicherbar sind, abrufbar sind.

12. Leuchtmittel (1) nach einen oder mehreren vorrangegangenen Ansprüchen, **dadurch gekennzeichnet, dass** ein Bewegungssensor enthalten ist, so dass insbesondere ein unbefugtes bewegen eines mit dem Leuchtmittel (1) ausgerüsteten Transportmittels, insbesondere eines Fahrradanhängers (7), detektierbar ist.

13. Leuchtmittel (1) nach einen oder mehreren vorrangegangenen Ansprüchen, **dadurch gekennzeichnet, dass** ein Lichtsensor enthalten ist, wodurch insbesondere eine automatische Lichtsteuerung herstellbar ist.

14. Leuchtmittel (1) nach einen oder mehreren vorrangegangen Ansprüchen, **dadurch gekennzeichnet, dass** die interne Stromquelle (6) ein Akkumulator und/oder eine Batterie ist, wobei der Akkumulator über eine Schnittstelle, insbesondere eine USB-Schnittstelle, ladbar ist.

15. Leuchtmittel (1) nach einen oder mehreren vorangegangen Ansprüchen, **dadurch gekennzeichnet, dass** eine Schnittstelle, insbesondere eine USB-Schnittstelle, enthalten ist, womit die Lichtleiste (5) über eine externe Stromquelle (6), insbesondere einem Smartphone, betreibbar ist.
